# EUROPEAN PATENT SPECIFICATION

(11) **EP 1 927 395 B1**
(45) Date of publication and mention of the grant of the patent: **12.08.2009**
(21) Application number: 07021987.8
(22) Date of filing: 13.11.2007
(51) Int. Cl.: B01J 8/00

(54) **Apparatus for loading particulate catalytic material and loading method**
Vorrichtung zur Befüllung von Rohren mit teilchenförmigem katalytischem Material und Befüllverfahren
Appareil de chargement de matériau catalytique particulaire et procédé de chargement

(30) Priority: 01.12.2006 DK 200601582
(43) Date of publication of application: 04.06.2008
(73) Proprietor: Haldor Topsoe A/S, 2800 Kgs. Lyngby (DK)
(72) Inventor: Zahirovic, Emir, 2400 Copenhagen NV (DK)
(74) Representative: Grünecker, Kinkeldey, Stockmair & Schwanhäusser Anwaltssozietät

(56) References cited:
- WO-A-20/06104832
- FR-A- 2 874 212
- US-A- 3 778 962

## Description

The invention concerns a method and an apparatus for loading particulate material in reactor tubes. More particularly, the invention relates to loading of particulate, catalytic material in reactor tubes in tubular reactors used in refinery plants.

Loading of particulate, catalytic material in tubular reactors is conventionally performed using the sock method. With this method, an elongated, sock-like member made of a flexible plastic material is filled with catalyst particles and lowered into the reactor tube with the aid of a line to which the sock is attached. On reaching the bottom of the reactor, the line is jerked, thus opening the sock and releasing the particles into the reactor.

When using this method, uneven and inhomogeneous loading of the reactor results in voids due to particle crushing by premature sock opening or in the formation of bridges by the particles. Void formation is undesirable because it leads to uneven temperature distribution and variations in pressure drop in the reactor. The voids can be partially removed by striking or hammering the sides of the reactor tube causing the reactor walls to vibrate. However, this process is labour-intensive and time-consuming.

US patent No. 5,247,970 A describes a method for filling particulate material into a vertical tube using a line with a damper in the form of a series of flexible, damper brushes arranged transversely to the line. The line with damper brushes is first lowered into the vertical tube, and then the particles are poured into the tube. It is stated that quick, even and reproducible filling is attained if the line is jerked a little during the filling operation, while simultaneously being lifted up gradually as the tube is filled.

This method, however, has several disadvantages. The falling distance of the particles from the brushes to the bottom of the tube is not under control, and the particles can also become wedged in-between the brushes and the walls of the tube rendering the apparatus immobile in the tube. The radial distance of the brushes from the line to the walls of the tube has to correspond to the tube diameter, which means each specific tube requires its own line with brushes.

The above-mentioned disadvantages and others associated with the various methods are solved by the method and apparatus of the invention as will be apparent in the following.

### SUMMARY OF THE INVENTION

It is an objective of the invention to provide a loading method and an apparatus for filling particulate, catalytic material in reactor tubes to ensure a uniform density profile of the loaded catalyst bed and a flat and horizontal surface of the top of the catalyst bed.

It is a further objective to provide a loading method, which is highly automated and therefore reduces the possibility of human errors and risk of reloading of reactor tubes.

It is yet an objective of the invention to provide an apparatus, whereby a uniform pressure drop and uniform flow across the reactor bed is obtained resulting in uniform utilisation of the catalyst.

The above objectives are achieved by the invention, which provides a method of loading particulate catalytic material into a reactor tube, the method comprising
(a) providing the lower end of an axial shaft capable of clockwise and counter-clockwise rotation with a horizontal distribution shaft;
(b) attaching a flexible hollow catalyst supply hose to the end of the horizontal distribution shaft extending into the reactor space, the other end of the flexible catalyst supply hose being available for entrance of catalyst particles externally the reactor tube;
(c) introducing through the upper end of the catalyst supply hose particulate catalytic material into the reactor tube;
(d) distributing the particulate catalytic material in the reactor tube by rotating the axial shaft in a clockwise or counter-clockwise direction while alternatively shortening the horizontal distribution shaft;
(e) thereafter shortening the axial shaft and repeating step (d) until the reactor tube has been loaded with the required amount of catalyst.

The invention further provides a loading apparatus being useful in the above loading method, the apparatus comprising an axial shaft capable of rotational movement around its axis in a clockwise and counter-clockwise direction, and having attached at its lower end perpendicular to the axis a horizontal distribution shaft, the length of which can be varied, one end of a flexible hollow catalyst supply hose being attached to the end of the horizontal distribution shaft extending into the reactor space, the other end of the flexible catalyst supply hose being available for entrance of catalyst particles external to the reactor tube.

### BRIEF DESCRIPTION OF THE DRAWINGS

Fig. 1 shows a loading apparatus according to the invention in a reactor tube.
Fig. 2 shows an embodiment of the loading apparatus.
Fig. 3 shows an embodiment of the horizontal distribution shaft.
Fig. 4 shows a transverse section through a reactor tube.
Fig. 5 shows an embodiment of the catalyst supply hose.
Fig. 6 shows details of the attachment of the hopper to the loading apparatus.
Fig. 7 shows an expanded view of the point of attachment of extension pipe to short pipe.
Fig. 8 shows a horizontal section through the catalyst supply hose when attached to the hopper.

### DETAILED DESCRIPTION OF THE INVENTION

The loading apparatus according to the invention comprises an axial shaft positioned in the reactor tube, the axial shaft supporting at its lower end a horizontal distribution shaft positioned perpendicularly to the axial shaft for distributing particulate catalytic material.

The horizontal distribution shaft can be collapsed in the axial direction to enable entrance of the loading apparatus into the reactor.

A flexible catalyst supply hose inserted through the reactor tube inlet is attached at one end to the horizontal distribution shaft. The other end of the catalyst supply hose leads to a hopper containing catalyst particles. The hopper is located outside the reactor tube. The catalyst supply hose allows the transfer of catalyst particles from the hopper to the horizontal distribution shaft for distribution in the reactor tube to form a catalytic bed.

The catalyst supply hose is a hollow flexible tube open at both its ends and longitudinally cut apart from end to end to provide a narrow slit along its entire length. It is bendable in nature. The presence of the slit combined with the flexible nature of the hose facilitates the movement and gradual removal of the hose during and after loading. Cutting sections off the hose during removal is avoided and the hose can thus be shortened gradually without its destruction. The catalyst particles in the hopper enter the catalyst supply hose and travel through it to the horizontal distribution shaft for distribution to form the catalytic bed.

During the distribution process the axial shaft is in a fixed position. The horizontal distribution shaft is fixed at one end to the lower end of the axial shaft and it can rotate around the axial shaft with the aid of for instance gears. The opposite end of the horizontal distribution shaft is attached to the open end of the catalyst supply hose. The length of the horizontal distribution shaft can be varied to provide distribution of the catalyst particles across the required surface area of the catalytic bed being formed. Initially prior to loading of the catalyst, the horizontal distribution shaft is at its maximum length corresponding to a position, whereby loading of catalyst particles initially takes place at the periphery of the reactor tube.

The length of the horizontal distribution shaft is shortened every time it has rotated for instance 360 degrees in a direction perpendicular to the axis in order to distribute catalyst particles from the periphery of the reactor tube to the center of the reactor tube. The rotation of the horizontal distribution shaft reverses direction after every full turn of 360 degrees in order to provide an even distribution of the catalyst particles across the catalytic bed. The horizontal distribution shaft alternates therefore between clockwise and anti-clockwise rotation.

This procedure is repeated until the horizontal distribution shaft is at its shortest length. The shortest length is obtained when the distance between the end of the horizontal distribution shaft attached to the catalyst supply hose and the axial shaft is at its minimum value. The catalytic bed surface is then covered by an even layer of catalyst particles.

The axial shaft is then moved upwards by shortening it in order to accommodate the catalytic bed being formed. The catalyst supply hose is also shortened. Distribution of catalyst particles is then continued in the same manner. The horizontal distribution shaft is initially at its shortest length when distribution starts. Gradually the length of the horizontal distribution shaft is increased to its maximum with alternative clockwise and anti-clockwise rotation during distribution as described earlier.

In order to provide smooth passage for the catalyst particles from the hopper through the hose to the horizontal distribution shaft the catalyst supply hose is shortened. The narrow slit in the catalyst supply hose obtained by cutting the hose apart longitudinally from end to end along its entire length provides an advantage when shortening the hose. During the loading process the catalyst supply hose is shortened by pulling the end of the hose attached to the hopper. The flexible catalyst supply hose thereby opens up at the longitudinal slit and can be peeled away from the hopper while loading of the catalyst particles continues. Destruction of the catalyst supply hose by cutting during removal is thus avoided and the hose can be reused.

In an embodiment of the invention the catalyst supply hose is surrounded by a sleeve of a flexible material for instance a plastic material such as polyvinyl chloride, PVC.

This prevents any stray catalyst particles from leaving the catalyst supply hose through the longitudinal slit.

The catalyst supply hose can be any type of hose that is flexible in nature. Preferable is any form of rubber hose for instance flexible rolls. Dumped down rubber hose is also suitable. The catalyst supply hose is equipped with a slit in its axial direction which aids in its positioning during filling of the reactor tube with catalyst particles. The slit allows the hose to be opened up and closed again after opening, thus increasing the flexible nature of the hose.

The catalyst supply hose can have ribs or grooves along its surface or it can have a smooth surface. The presence of the ribs or grooves provides an extra grip on the catalyst particles.

The catalyst supply hose is attached to the hopper in the following manner: the end of the flexible catalyst supply hose available for entrance of catalyst particles is supported by a re-positioning tube capable of a sliding movement in the axial direction and encircling the catalyst supply hose. The catalyst supply hose in turn encircles a short pipe, and a cover pipe encircles and is attached to both the repositioning tube and the short pipe, thereby holding these two pipes in place relative to each other. The cover pipe is capable of a sliding movement that is coordinated with the sliding movement of repositioning tube.

In a preferred embodiment of the invention, the axial shaft consists of a plurality of separate axial shaft sections.

The axial shaft sections can be equally sized and are assembled to form one long axial shaft which can be inserted in a reactor tube such as a tubular reformer. This allows for the easy assembling of the axial shaft prior to distribution and for easy dissembling and shortening of the axial shaft as the catalytic bed height increases.

The separate shaft sections can be assembled by for instance screwing one section into another in any manner known in the art. An extra pipe encircling the resulting joints can be used to prevent dissembling of the shaft section in the event that they become unscrewed.

In a preferred embodiment of the invention, the horizontal distribution shaft consists of at least one horizontal shaft section. The horizontal shaft sections can have equal lengths and are assembled to form one long horizontal shaft attached at one end to the bottom end of the axial shaft. The length of the horizontal shaft can thus be adjusted to correspond to reactor tubes of different diameters.

In another preferred embodiment of the invention, the horizontal distribution shaft consists of two or more horizontal shaft sections, where each section has a radius smaller than the previous section. Each section therefore fits into or retracts into the previous section in a telescopic manner, thereby allowing the horizontal distribution shaft to increase or decrease in length i.e. in radius, by gradual insertion of one section into another using pneumatic or hydraulic means. This embodiment is advantageous when placing the loading apparatus in the reactor tube or removing it from the reactor tube since the horizontal shaft sections can be extended or retracted into a more compact form that allows for variation in radius. This also provides easy removal from the reactor tube.

The loading apparatus can be controlled from the outside of the reactor via a computerized system. The loading process can be followed by mounting a video camera on the horizontal distribution shaft.

With the method according to the invention, the risk of crushing of catalyst particles dropped from too high a height is eliminated.

The human factor required during loading is minimal and continuous loading can be carried out.

A high uniform loading density and a flat and horizontal catalyst bed surface is obtained by the method.

A uniform pressure drop and thus uniform flow through the catalyst bed is also obtained. The result is uniform utilisation of the catalyst and a longer catalyst life.

The catalyst loading apparatus of the invention is suitable for loading of reactors in the chemical industry, and in particular for loading in refinery reactors, where loading in the presence of a gas such as nitrogen is carried out. This could for example be loading of a hydrodesulphurisation reactor for treating naphtha. The presence of an operator in the reactor tube is therefore not necessary.

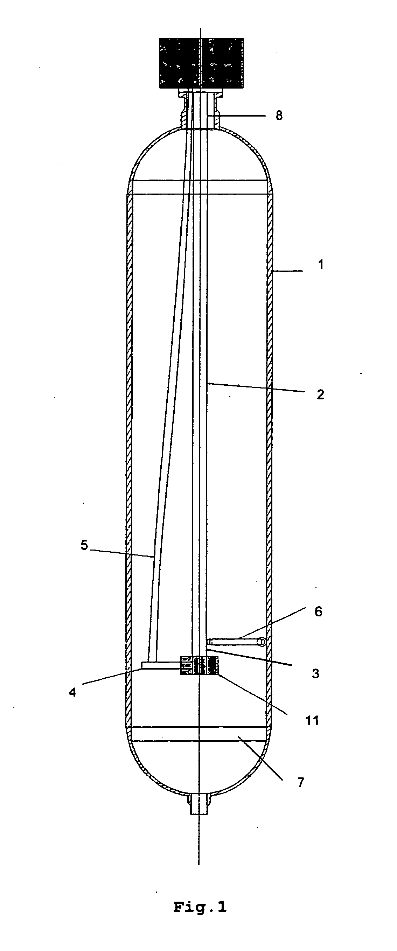

Fig. 1 shows a loading apparatus according to the invention placed in a reactor tube 1 for loading of particulate catalytic material. Axial shaft 2 is positioned in reactor tube 1 in the tube's axial direction. Attached via joining section 11 to the lower end 3 of the axial shaft 2 is horizontal distribution shaft 4 for distribution of catalyst particles. Catalyst supply hose 5 is inserted through the reactor tube inlet 8 and is fixed at one open end to the horizontal distribution shaft 4, the other upper open end of the hose extending through the reactor inlet 8.

The axial shaft 2 is held in place in the reactor tube 1 by fixation means 6. Fixation means 6 allows axial shaft 2 to move up and down in an axial direction and prevents movement in a horizontal direction.

The catalyst particles enter catalyst supply hose 5 at its open end outside the reactor tube and travel through catalyst supply hose 5 to the horizontal distribution shaft 4 for distribution on catalyst plate 7 to form the catalytic bed.

During the distribution process the axial shaft 2 rotates around its axis causing horizontal distribution shaft 4 to rotate in the same direction. After a 360 degree turn the rotation direction is reversed and the length of horizontal distribution shaft 4 is shortened. In this way catalyst particles are distributed on catalyst plate 7 from its periphery to its center.

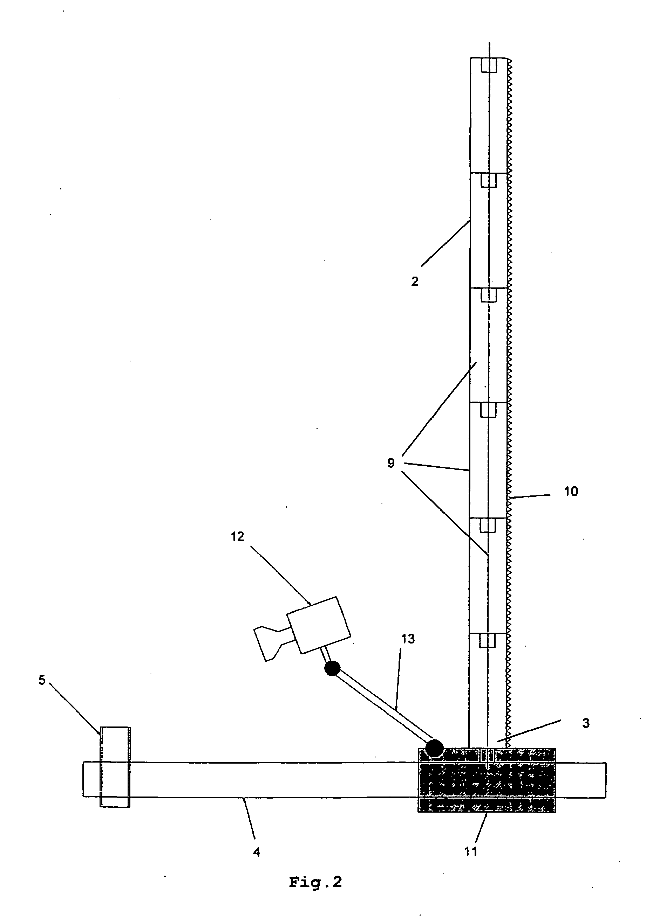

Fig. 2 shows an embodiment of the loading apparatus in which axial shaft 2 consists of a plurality of separate axial shaft sections 9. Axial shaft sections 9 can be equally sized if required and are assembled to form one long axial shaft 2 which can be inserted in a reactor. Axial shaft 2 has a final length corresponding to the length of the reactor tube.

Optionally, a recording unit 12 on stand 13 can be attached at joining section 11 to obtain pictures or videos of the loading process.

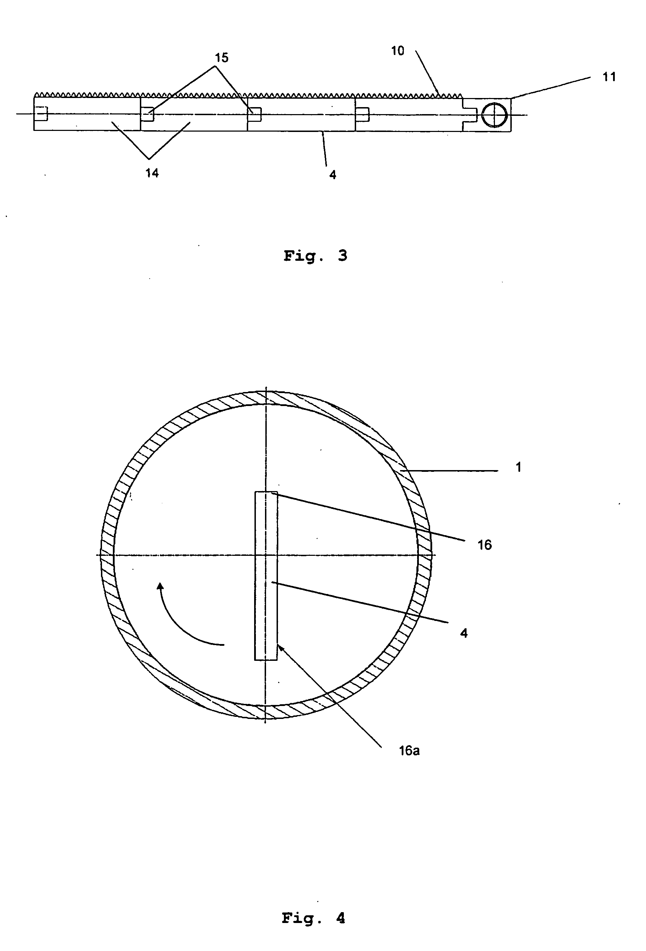

Fig. 3 shows an embodiment of the horizontal distribution shaft in which horizontal distribution shaft 4 consists of at least one horizontal shaft section 14. The horizontal shaft sections 14 can be equal in length if required and are assembled to form one long horizontal shaft 4 attached at one end to lower end 3 of the axial shaft 2. Any means of assembling horizontal shaft sections 14 known in the art can be used. In this embodiment horizontal shaft sections 14 are provided at either end with interlocking elements 15.

Fig. 4 shows a transverse section through reactor tube 1. The direction of rotation of horizontal distribution shaft 4 is shown in this case as being in a clockwise direction. Here horizontal distribution shaft 4 is not of the telescopic type. Both ends of horizontal distribution shaft 4 are shown. One end 16 is attached to the catalyst supply hose for distribution of catalyst particles at this end. The other end 16a extends in the reactor space opposite the end 16. Horizontal distribution shaft 4 is therefore able to move in a backwards and forwards direction, thereby decreasing and increasing, respectively, its radius in the reactor tube.

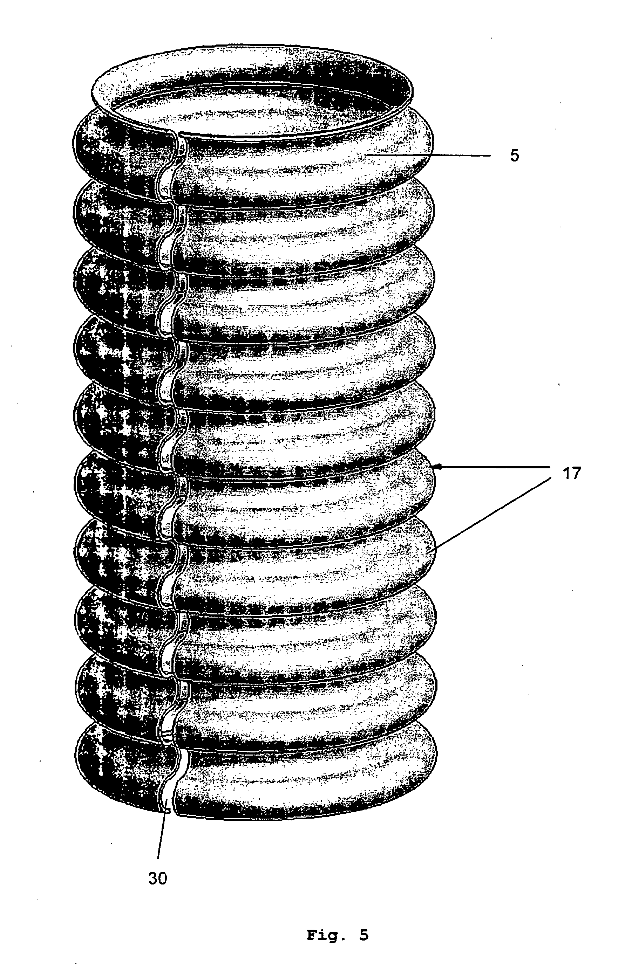

Fig. 5 shows an embodiment of the catalyst supply hose. In this embodiment catalyst supply hose 5 has a plurality of circumferentially positioned grooves or ribs 17. Catalyst supply hose 5 is slit in its axial direction. This longitudinal slit 30 extends along the entire length of catalyst supply hose 5.

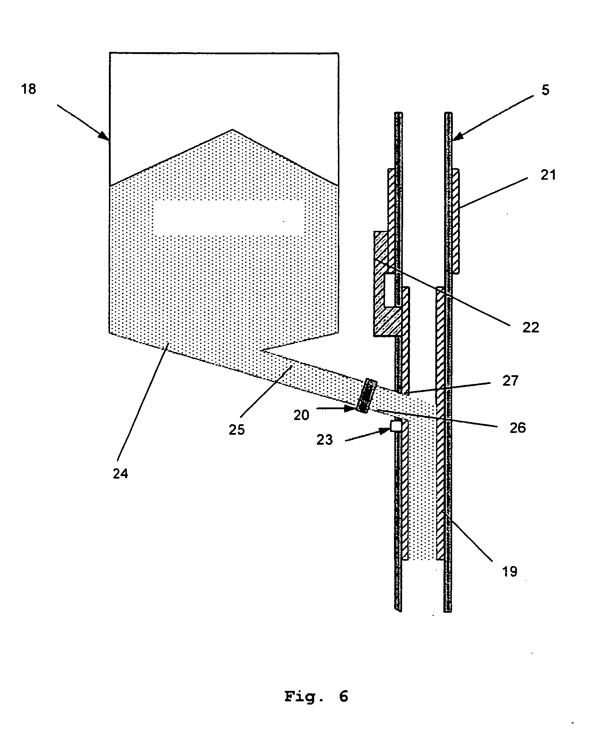

Fig. 6 shows an embodiment in which a hopper 18 containing catalyst 24 is attached to catalyst supply hose 5. Hopper 18 is provided with hopper outlet tube 25 through which catalyst particles 24 are transferred to catalyst supply hose 5 for transfer to the reactor tube. A short pipe 19 is fixed to hopper outlet tube 25 at joint 20 via extension pipe 26. The short pipe 19 is positioned with its axis parallel to the axis of catalyst supply hose 5 and it extends both above and below extension pipe 26 at the point of attachment 27.

Flexible catalyst supply hose 5 can be opened up with the aid of slit 30 (not shown) and thereafter closed or folded around short pipe 19 both above and below extension pipe 26. Due to the flexible nature of catalyst supply hose 5 and the presence of slit 30 catalyst supply hose 5 opens up in the region of extension pipe 26 and is otherwise closed or folded around short pipe 19 in its axial direction. One end of catalyst supply hose 5 leads to the inlet of reactor tube 1 and the opposite end of catalyst supply hose 5 above point of attachment 27 to extension pipe 26 is held in place by repositioning tube 21 and first cover pipe 22.

Repositioning tube 21 encircles catalyst supply hose 5, while catalyst supply hose 5 in turn encircles short pipe 19. Repositioning tube 21 is capable of a sliding movement, thereby changing position in the axial direction. This sliding movement allows repositioning tube 21 to partially or totally overlap short pipe 19.

Cover pipe 22 encircles and is attached to both repositioning tube 21 and short pipe 19, thereby holding these two pipes in place relative to each other. Cover pipe 22 is also capable of a sliding movement that is coordinated with the sliding movement of repositioning tube 21.

A sleeve which also functions as a cover pipe (not shown) can be present encircling catalyst supply hose 5 primarily in the region from the point of attachment 27 of short pipe 19 to extension pipe 26 to the inlet of reactor tube 1 or to the horizontal distribution shaft 4. This embodiment is particularly useful when catalyst supply hose 5 is without ribs or grooves, as it prevents the loss of particulate catalytic material through slit 30. The sleeve can be made of for instance a plastic material such as PVC.

A cutting device 23, for instance a razor, can be fixed in a suitable position to facilitate cutting and thereby removal of the sleeve after ended use. The cutting device 23 can for instance be positioned at the point of attachment 27 of the extension pipe 26 to the short pipe 19.

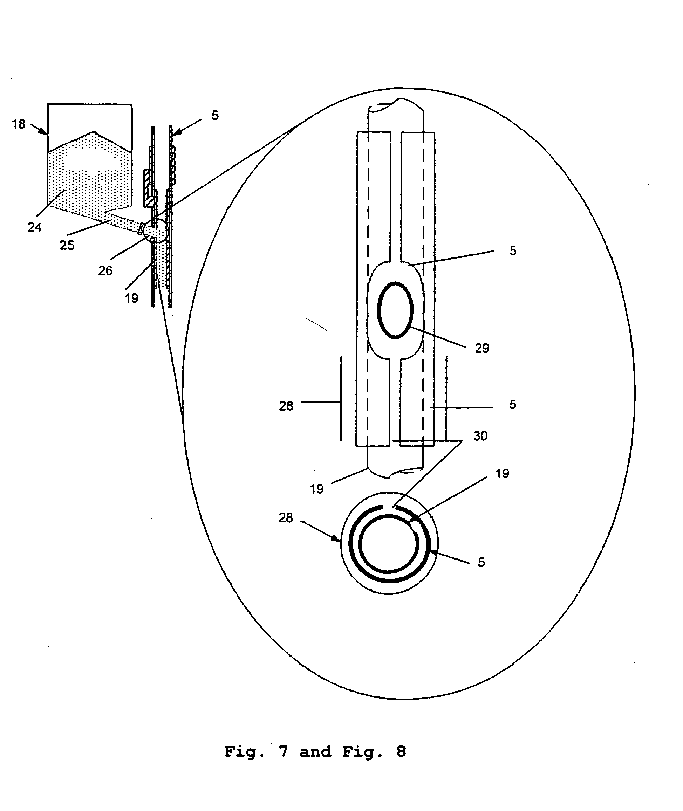

Figs. 7 and 8 show an expanded view of the point of attachment 27 of extension pipe 26 to short pipe 19 when sleeve 28 is present. In Fig. 7, point of attachment 27 of extension pipe 26 to short pipe 19 is illustrated by a circular opening 29 in short pipe 19. Fig. 8 shows a horizontal section below extension pipe 26. Short pipe 19 is encircled by catalyst supply hose 5 having slit 30. Encircling catalyst supply hose is sleeve 28.

## Claims

1. Apparatus for loading particulate catalytic material into reactor tubes (1) comprising an axial shaft (2) capable of rotational movement around its axis in a clockwise and counter-clockwise direction and having attached at its lower end (3) perpendicular to the axis a horizontal distribution shaft (4), the length of which can be varied, one end of a flexible hollow catalyst supply hose (5) being attached to the end of the horizontal distribution shaft (4) extending into the reactor space, the other end of the flexible catalyst supply hose (5) being available for entrance of particulate catalytic material (24) external to the reactor tube.

2. A loading apparatus according to claim 1, wherein the horizontal distribution shaft (4) comprises a plurality of horizontal shaft sections (14) of gradually decreasing radius extending from the axial shaft, each horizontal shaft section of smaller radius capable of retracting into a preceding horizontal shaft sections of larger radius.

3. A loading apparatus according to claim 1, wherein the horizontal distribution shaft (4) comprises a plurality of horizontal shaft sections (14) joined end to end to form the shaft (4).

4. A loading apparatus according to claim 1, wherein the flexible catalyst supply hose (5) has circumferentially positioned ribs or grooves (17).

5. A loading apparatus according to claim 1 or 4, wherein the catalyst supply hose (5) is enclosed by a sleeve (28).

6. A loading apparatus according to claim 1, wherein the flexible catalyst supply hose (5) is longitudinally cut apart from end to end to provide a narrow slit (30) along its entire length.

7. A loading apparatus according to claim 6, wherein the end of the flexible catalyst supply hose (5) available for entrance of particulate catalytic material (24) is supported by a re-positioning tube (21) capable of a sliding movement in the axial direction and encircling the catalyst supply hose (5), the catalyst supply hose (5) encircling a short pipe (19) and a cover pipe (22) encircling and being attached to both the repositioning tube (21) and the short pipe (19), thereby holding these two pipes in place relative to each other, the cover pipe (22) being capable of a sliding movement that is coordinated with the sliding movement of repositioning tube (21).

8. A loading apparatus according to claim 7, wherein the repositioning tube (21) partially overlaps the short pipe (19), the catalyst supply hose (5) being present in between the repositioning tube (21) and the short pipe (19).

9. Method of loading particulate catalytic material 24 into a reactor tube (1) comprising
(a) providing the lower end (3) of an axial shaft (2) capable of clockwise and counter-clockwise rotation with a horizontal distribution shat (4);
(b) attaching a flexible hollow catalyst supply hose (5) to the end of the horizontal distribution shaft (4) extending into the reactor space, the other end of the flexible catalyst supply hose (5) being available for entrance of particulate catalytic material (24) externally the reactor tube;
(c) introducing through the upper open end of the catalyst supply hose (5) particulate catalytic material (24) into the reactor tube (1);
(d) distributing the particulate catalytic material (24) in the reactor tube (1) by rotating the axial shaft(2) in a clockwise or counter-clockwise direction while alternatively shortening the horizontal distribution shaft (4);
(e) thereafter shortening the axial shaft (2) and repeating step (d) until the reactor tube (1) has been loaded with the required amount of particulate catalytic material (24).

10. Use of the loading apparatus according to claim 1 for loading of particulate catalytic material (24) in reactor tubes (1) for refinery processes.

## Patentansprüche

1. Vorrichtung zum Füllen von teilchenförmigem katalytischen Material in Reaktorrohre (1) umfassend eine axiale Welle (2), welche in der Lage ist eine Rotationsbewegung um ihre Achse in einer Richtung mit dem Uhrzeigersinn oder entgegen des Uhrzeigersinns durchzuführen, und an deren unteren Ende (3) senkrecht zu der Achse eine horizontale Verteilungswelle (4) befestigt ist, deren Länge verändert werden kann, wobei ein Ende eines flexiblen hohlen Katalysatorzufuhrschlauchs (5) an dem Ende der horizontalen Verteilungswelle (4) befestigt ist, die sich in den Reaktorraum erstreckt, und wobei das andere Ende des flexiblen Katalysatorzufuhrschlauchs (5) zum Eintritt eines teilchenförmigen katalytischen Materials (24) außerhalb des Reaktionsrohrs zur Verfügung steht.

2. Befüllvorrichtung nach Anspruch 1, wobei die horizontale Verteüungswelle (4) eine Vielzahl von horizontalen Wellenabschnitten (14) umfasst, mit sich stufenweise verringerndem Radius, welche sich von der axialen Welle erstrecken, wobei jeder horizontale Wellenabschnitt mit kleinerem Radius in einen vorangehenden horizontalen Wellenabschnitt mit größerem Radius eingezogen werden kann.

3. Befüllvorrichtung nach Anspruch 1, wobei die horizontale Verteilungsachse (4) eine Vielzahl von horizontalen Achsenabschnitten (14) umfasst, die Ende an Ende verbunden sind, um die Achse (4) zu bilden.

4. Befüllvorrichtung nach Anspruch 1, wobei der flexible Katalysatorzufuhrschlauch (5) an dem Umfang angeordnete Rippen oder Nuten (17) aufweist.

5. Befüllvorrichtung nach Anspruch 1 oder 4, wobei der Katalysatorzufuhrschlauch (5) von einer Hülle (28) eingeschlossen ist.

6. Befüllvorrichtung nach Anspruch 1, wobei der flexible Katalysatorzufuhrschlauch (5) längs von einem Ende zum anderen Ende aufgeschnitten ist, um einen engen Schlitz (3) über die ganze Länge bereitzustellen.

7. Befüllvorrichtung nach Anspruch 6, wobei das Ende des flexiblen Katalysatorzufuhrrohrs (5), welches für den Eintritt des teilchenförmigen katalytischen Materials (24) bereitsteht, von einem Umpositionierungsrohr (21) unterstützt ist, welches eine gleitende Bewegung in der axialen Richtung durchführen kann und den Katalysatorzufuhrschlauch (5) umgibt, wobei der Katalysatorzufuhrschlauch (5) ein kurzes Rohr (19) umgibt und ein Abdeckrohr (22) sowohl an dem Umpositionierungsrohr (21) als auch an dem kurzen Rohr (19) befestigt ist und diese umgibt, wodurch diese zwei Rohre relativ zueinander in ihrer Position gehalten werden, wobei das Abdeckrohr (22) eine gleitende Bewegung durchführen kann, die mit der gleitenden Bewegung des Umpositionierungsrohrs (21) koordiniert ist.

8. Befüllvorrichtung nach Anspruch 7, wobei das Umpositionierungsrohr (21) teilweise das kurze Rohr (19) überlappt, wobei der Katalysatorzufuhrschlauch (5) zwischen dem Umpositionierungsrohr (21) und dem kurzen Rohr (19) angeordnet ist.

9. Verfahren zum Füllen von teilchenförmigem katalytischen Material (24) in ein Reaktorohr (1) umfassend:
(a) Bereitstellen des unteren Endes (3) einer axialen Achse (2), welche eine Rotation mit dem Uhrzeigersinn oder entgegen des Uhrzeigersinns durchführen kann, mit einer horizontalen Verteilungsachse (4);
(b) Befestigen eines flexiblen hohlen Katalysatorzufuhrschlauches (5) an dem Ende der horizontalen Verteilungsachse (4), welche sich in den Reaktorraum erstreckt, wobei das andere Ende des flexiblen Katalysatorzufuhrschlauchs (5) für den Eintritt des teilchenförmigen katalytischen Materials (24) außerhalb des Reaktorrohres zur Verfügung steht;
(c) Einführen von teilchenförmigem katalytischen Material (24)durch das offene obere Ende des Katalysatorzufuhrschlauchs (5) in das Reaktorrohr (1);
(d) Verteilen des teilchenförmigen katalytischen Materials (24) in das Reaktorrohr (1), indem die axiale Achse (2) mit dem Uhrzeigersinn oder entgegen des Uhrzeigersinnes rotiert, während die horizontale Verteilungsachse (4) abwechselnd verkürzt wird;
(e) Anschließend Verkürzen der axialen Achse (2) und wiederholen des Schrittes (d) bis das Reaktorrohr (1) mit der erforderten Menge des teilchenförmigen katalytischen Materials (24) befüllt wurde.

10. Verwendung der Befüllvorrichtung nach Anspruch 1 zum Befüllen des teilchenförmigen katalytischen Materials (24) in Reaktorrohre (1) für Raffinerieverfahren.

## Revendications

1. Appareil pour le chargement de matériau catalytique particulaire dans des tubes de réacteur (1) comprenant un arbre axial (2) capable d'un mouvement rotationnel autour de son axe dans un sens horaire et antihoraire et comportant, fixé à son extrémité inférieure (3) perpendiculaire à l'axe, un arbre de distribution horizontal (4), dont la longueur peut être modifiée, une extrémité d'un tuyau souple et creux d'alimentation de catalyseur (5) étant fixée à l'extrémité de l'arbre de distribution horizontal (4) s'étendant dans l'espace du réacteur, l'autre extrémité du tuyau souple d'alimentation de catalyseur (5) étant disponible pour l'entrée de matériau catalytique particulaire (24) extérieur au tube du réacteur.

2. Appareil de chargement selon la revendication 1, dans lequel l'arbre de distribution horizontal (4) comprend une pluralité de sections d'arbre horizontal (14) de rayon progressivement décroissant s'étendant depuis l'arbre axial, chaque section d'arbre horizontal de rayon inférieur pouvant se rétracter dans une section d'arbre horizontal précédente de rayon plus grand.

3. Appareil de chargement selon la revendication 1, dans lequel l'arbre de distribution horizontal (4) comprend une pluralité de sections d'arbre horizontal (14) jointes bout à bout pour former l'arbre (4).

4. Appareil de chargement selon la revendication 1, dans lequel le tuyau souple d'alimentation de catalyseur (5) comporte des nervures ou des rainures (17) positionnées circonférentiellement.

5. Appareil de chargement selon la revendication 1 ou 4, dans lequel le tuyau d'alimentation de catalyseur (5) est enfermé par un manchon (28).

6. Appareil de chargement selon la revendication 1, dans lequel le tuyau souple d'alimentation de catalyseur (5) est séparé longitudinalement d'une extrémité à l'autre pour fournir une fente étroite (30) sur la totalité de sa longueur.

7. Appareil de chargement selon la revendication 6, dans lequel l'extrémité du tuyau souple d'alimentation de catalyseur (5) disponible pour l'entrée de matériau catalytique particulaire (24) est supportée par un tube de repositionnement (21) pouvant effectuer un mouvement coulissant dans la direction axiale et encerclant le tuyau d'alimentation de catalyseur (5), le tuyau d'alimentation de catalyseur (5) encerclant un tuyau court (19) et un tuyau de couverture (22) encerclant et étant fixé à la fois au tube de repositionnement (21) et au tuyau court (19), maintenant ainsi ces deux tuyaux en place l'un par rapport à l'autre, le tuyau de couverture (22) pouvant effectuer un mouvement coulissant coordonné avec le mouvement coulissant du tube de repositionnement (21).

8. Appareil de chargement selon la revendication 7, dans lequel le tube de repositionnement (21) recouvre partiellement le tuyau court (19), le tuyau d'alimentation de catalyseur (5) étant présent entre le tube de repositionnement (21) et le tuyau court (19).

9. Procédé de chargement de matériau catalytique particulaire (24) dans un tube du réacteur (1), comprenant :
(a) la fourniture de l'extrémité inférieure (3) d'un arbre axial (2) capable d'une rotation horaire et antihoraire avec un arbre de distribution horizontal (4) ;
(b) la fixation d'un tuyau souple et creux d'alimentation de catalyseur (5) à l'extrémité de l'arbre de distribution horizontal (4) s'étendant dans l'espace du réacteur, l'autre extrémité du tuyau souple d'alimentation de catalyseur (5) étant disponible pour l'entrée de matériau catalytique particulaire (24) extérieurement au tube du réacteur ;
(c) l'introduction, à travers l'extrémité supérieure ouverte du tuyau d'alimentation de catalyseur (5), de matériau catalytique particulaire (24) dans le tube du réacteur (1) ;
(d) la distribution du matériau catalytique particulaire (24) dans le tube du réacteur (1) en faisant tourner l'arbre axial (2) dans un sens horaire ou antihoraire tout en raccourcissant alternativement l'arbre de distribution horizontal (4) ;
(e) puis le raccourcissement de l'arbre axial (2) et la répétition de l'étape (d) jusqu'à ce que la quantité requise de matériau catalytique particulaire (24) ait été chargée dans le tube du réacteur (1).

10. Utilisation de l'appareil de chargement selon la revendication 1, pour le chargement de matériau catalytique particulaire (24) dans des tubes de réacteur (1) pour des procédés de raffinage.
